# EUROPEAN PATENT APPLICATION

(11) **EP 1 071 190 A2**
(43) Date of publication of application: **24.01.2001**
(21) Application number: 00115365.9
(22) Date of filing: 15.07.2000
(51) Int. Cl.: H02K 7/102, H02K 15/02

(54) **Magnetic flux divertor**

(30) Priority: 23.07.1999 IT VI990158
(71) Applicant: Costruzioni Elettromeccaniche Soga S.p.A., 36075 Montecchio Maggiore (Vicenza) (IT)
(72) Inventor: Soga, Lino, 36075 Montecchio Maggiore (Vicenza) (IT)
(74) Representative: Bettello, Pietro, Dott. Ing.

(57) **Abstract**

A magnetic flux divertor, particularly adapted to be mounted on self-braking electric motors wherein an anchor, keyed on the rotor shaft, when the motor is de-energised, locks under the thrust action of a spring and, through a frictioned cone, against the casing wall, thus causing the rotor to immediately stop. Said divertor is characterised in that it exhibits a particular laminar structure capable of significantly increasing the magnetic force which operates on the above anchor.

## Description

The finding relates to the construction of a magnetic flux divertor, particularly adapted to be mounted on self-braking electric motors.

As known, on the so-called self-braking electric motors there is present an anchor keyed on the rotor shaft, which - when the motor is de-energised - locks under the thrust action of a spring and, through a frictioned cone, against the shield wall, thus causing the same rotor to immediately stop.

During the operation of the motor, the anchor is maintained in released position by the attraction action exerted by the so-called flux divertor, which diverts part of the magnetic flux produced in the stator onto the same anchor.

Said magnetic flux divertor is substantially shaped as an annular body, die-cast or coupled to the rotor pack, provided with a plurality of polar expansions, or radial teeth, which form as many electromagnets.

For the well-known laws of electromagnetism, the greater the number of polarities of the stator, the greater the neutral areas.

Thus, to reduce said disadvantage it is necessary to produce flux divertors with the highest possible number of polar expansions.

At the present state of the art, flux divertors are obtained through turning and milling operations of metal parts, coupled or not with the metal body of the rotor, or through a sintering process of magnetic materials.

In both systems, specialized and expensive machining is needed for obtaining small-sized teeth.

Object of the present finding is that of providing a flux divertor wherein the teeth should exhibit a minimum width, be of easy implementation and have a relatively reasonable final cost.

This is attained by providing a flux divertor consisting of a plurality of magnetic foils, with minimum thickness, in the range of some tenths of millimetre, radially arranged and spaced from one another by a layer, of minimum thickness as well, of non-magnetic material, which forms the binding material of the same divertor.

In this way, a flux divertor is obtained, shaped as a ring, exhibiting a very high number of radial divisions which thus ensure high performances.

Further object of the finding is that of describing a machining process for obtaining said foil flux divertor of easy implementation, high rapidity and low cost.

This is attained through a work cycle comprising a first shearing step of the single foils, a successive packaging step of the same foils, a third dipping step of the foil pack into a bath of non-magnetic material so that said material enters between the interspaces of the side by side foils, and finally, a mechanical machining step of the block thus obtained so as to obtain the single laminar bodies forming the flux divertor to be used.

These and other features of the finding are better pointed out through the description of one of possible embodiments thereof, made purely by way of an illustrative and not limitative example, with reference to the attached drawings, wherein:
- Figure 1 (Table I) shows an elevation and section view of a self-braking motor provided with the magnetic flux divertor of the finding;
- Figure 2 (Table II) shows a cross section view according to line II-II of figure 1;
- Figure 3 shows a detailed view of the section of the flux divertor;
- Figures 4-9 (Tables III-IV) show the successive steps of the work cycle for implementing the flux divertor visible in figure 1;
- Figures 10-13 (Table V) show two sections of the divertor of the finding, respectively before and after the mechanical shape machining.

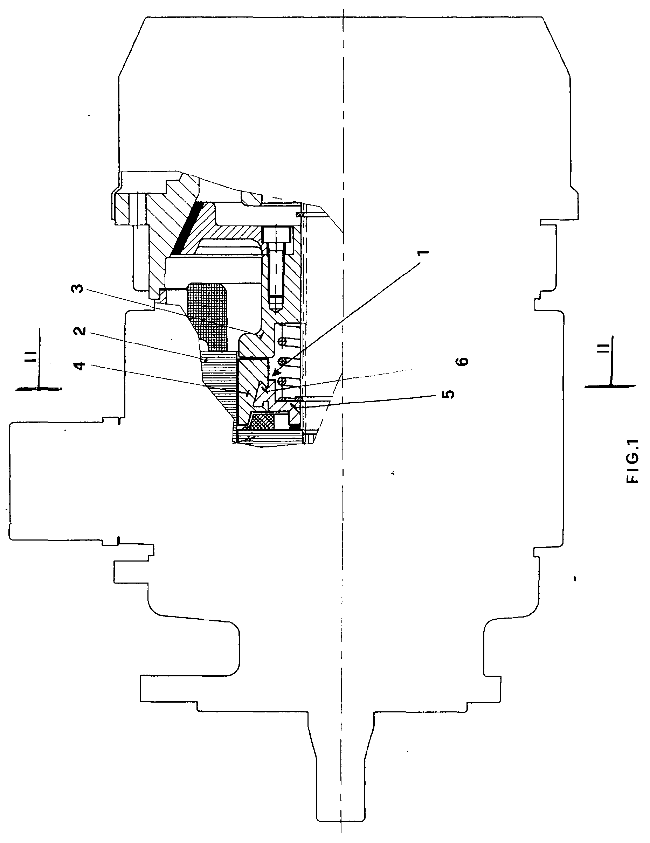

As it can be seen in figure 1, the flux divertor 1, interposed between stator 2 and the braking anchor 3, consists of a plurality of magnetic foils 4, supported by an annular body 5, made of a non-magnetic material and coupled to the same through the shaped clamping element 6.

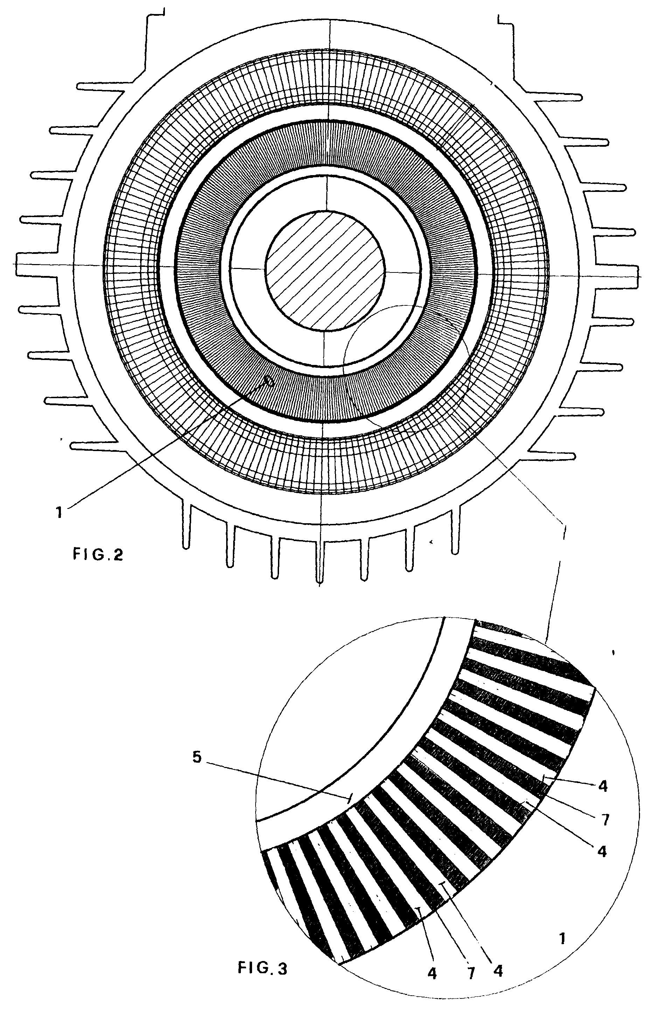

As it can be seen in figures 2-3, the magnetic foils 4 are radially arranged and separate from one another by a layer 7 of non-magnetic material forming the annular body 5.

As it can be seen in figure 4, starting from a strip 8 of magnetic foil, impressions 9' and 9'' of the foils are obtained according to a shearing template, which realises two longitudinal rows of impressions, such as to obtain - for the purpose of the operation - two flux divertors.

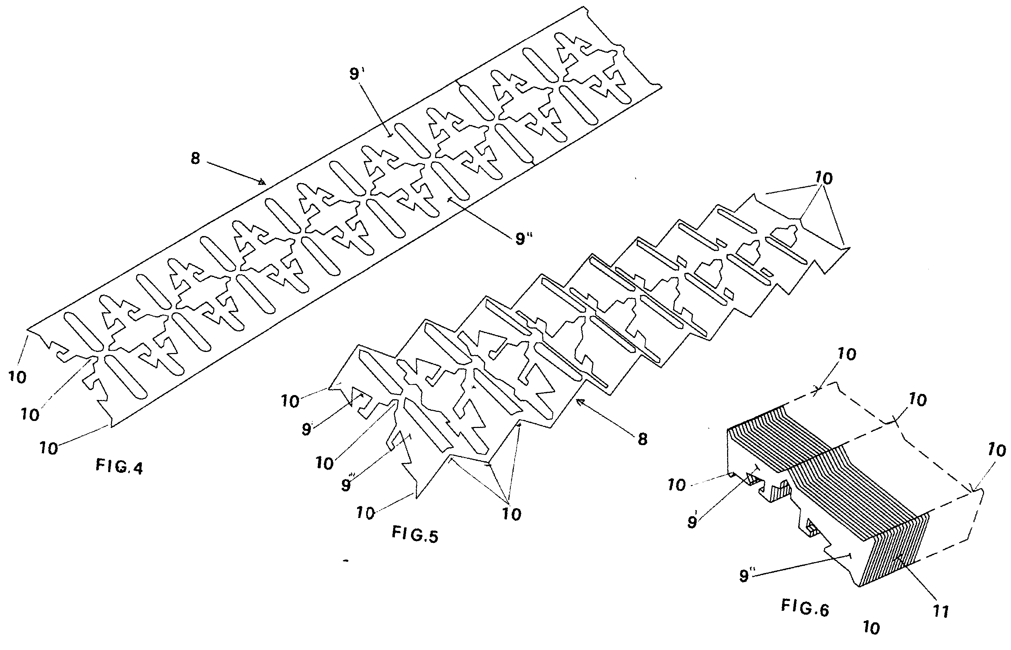

As it can be seen in figure 5, strip 8 is then subjected to an action of double bending at acute angle with the transverse bending vertex passing along the cusp contact points 10 which connect any impression 9 to the successive one.

Afterwards, with a pressing action, the bent strip 8 is compacted, thus forming a pack 11 where impressions 9 are side by side, as it can be seen in figure 6.

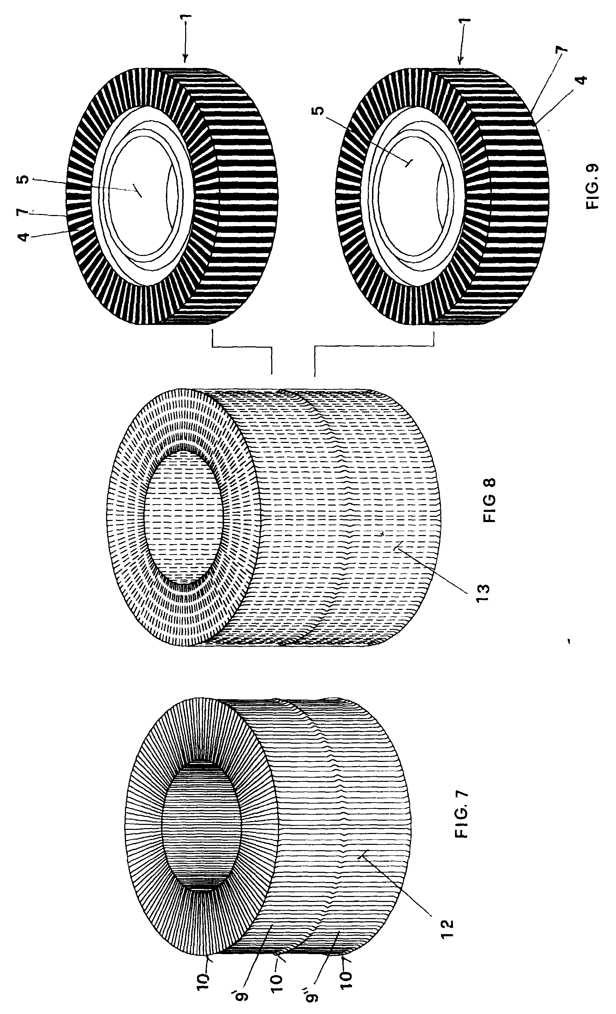

Afterwards, pack 11 is calendered so as to form an annular body 12, as it can be seen in figure 7, said body being susceptible of taking up a variable diameter on the basis of the final size of the divertor.

Afterwards, the annular body 12 is totally immersed in a die-casting die with non-magnetic material, for example an aluminium alloy, forming block 13, as it can be seen in figure 8.

Finally, with suitable turning operations, two final flux divertors are obtained from block 13, as it can be seen in figure 9, where the magnetic foils 4 are held together and spaced from the non-magnetic binding material.

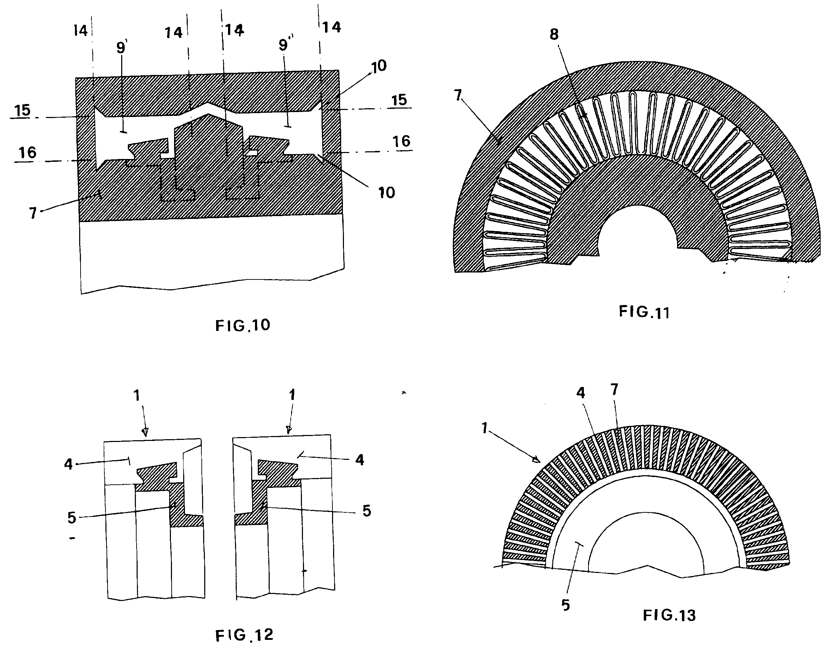

Specifically, starting from the die-cast block 13 (see figure 10), wherein strip 8 is totally immersed into the non-magnetic material, a roll flattening operation of heads 14 and a turning operation on the outer and inner diameter are carried out, respectively according to lines 15 and 16 with which, besides defining the outer profile and the inner profile of two divertors, cusps 10 are eliminated, thus obtaining the plurality of radially arranged magnetic foils 4 reciprocally spaced from the layer of non-magnetic material 8 (see figure 11).

Of course, different embodiments are possible besides that illustrated, both as profile of the magnetic foils, and as steps of the production cycle, without departing from the claims of the patent, specified hereinafter.

## Claims

1. MAGNETIC FLUX DIVERTOR, particularly adapted to be mounted on self-braking electric motors wherein an anchor, keyed on the rotor shaft, when the motor is de-energised, locks under the thrust action of a spring and, through a frictioned cone, against the casing wall, thus causing the rotor to immediately stop, said anchor being maintained in release position by the attraction action exerted by the flux divertor, which diverts part of the magnetic flux produced in the stator onto the same anchor, said magnetic flux divertor
being characterised in that
it exhibits a laminar structure consisting of a plurality of magnetic foils, with minimum thickness, arranged reciprocally side by side and separate from one another by a layer of non-magnetic material, said non-magnetic material forming the binder, as well a& the support body of the entire pack formed by the above foils.

2. MAGNETIC FLUX DIVERTOR, according to claim 1, characterised in that the magnetic foils are radially arranged on a circumference, said foils being reciprocally separated by a layer of non-magnetic material which forms the binder, as well as the annular body of said divertor.

3. METHOD FOR IMPLEMENTING THE MAGNETIC FLUX DIVERTOR, as described in claims 1 and/or 2, characterised in that it comprises a work cycle consisting of a first implementation step of the single magnetic foils, a successive packaging step of the same, a further and successive dipping step of the foil pack into a bath of non-magnetic material, so that the same material enters between the interspaces of the side by side foils, thus forming a single block, and finally, a mechanical machining step of the block thus obtained so as to obtain the final laminar body to be directly mounted on the operating machine.

4. METHOD FOR IMPLEMENTING THE MAGNETIC FLUX DIVERTOR, according to claim 3, characterised in that the foils are obtained through strip shearing.

5. METHOD FOR IMPLEMENTING THE MAGNETIC FLUX DIVERTOR, according to claim 3, characterised in that a plurality of impressions is first obtained on a single strip of non-magnetic material, afterwards the foil is bent so that said impressions get reciprocally superimposed, thus forming a pack, which is then immersed into a bath of non-magnetic material.

6. METHOD FOR IMPLEMENTING THE MAGNETIC FLUX DIVERTOR, according to claim 3, characterised in that the application of the non-magnetic material, preferably aluminium, which serves as binder of the magnetic foils, occurs through die-casting die.

7. MAGNETIC FLUX DIVERTOR (1), according to one or more of the previous claims, interposed between the stator (2) and the braking anchor (3), mounted on a self-braking electric motor, in se known, characterised in that it comprises a plurality of magnetic foils (4) supported by an annular body (5) of non-magnetic material, and coupled to the same through the shaped clamping element (6), said magnetic foils (4) being radially arranged and separate from one another by a layer (7) of non-magnetic material, which forms the annular body (5) of said divertor.

8. METHOD FOR IMPLEMENTING THE MAGNETIC FLUX DIVERTOR, according to claim 7, characterised in that it provides for the use of a strip (8) of magnetic foil on which the impressions (9', 9'') of the foils are obtained, according to a shearing template, which realises two longitudinal rows of impressions and such as to obtain, at the end of the operation, two flux divertors, said sheared strip (8) being then subjected to an action of double bending at acute angle with the transverse bending vertex passing along the cusp contact points (10) which connect any impression (9) to the successive one.

9. METHOD FOR IMPLEMENTING THE MAGNETIC FLUX DIVERTOR, according to claim 8, characterised in that the bent strip (8) is compacted, thus forming a pack (11) where the impressions (9) are side by side.

10. METHOD FOR IMPLEMENTING THE MAGNETIC FLUX DIVERTOR, according to claim 9, characterised in that the pack (11) is calendered so as to form an annular body (12).

11. METHOD FOR IMPLEMENTING THE MAGNETIC FLUX DIVERTOR, according to claim 10, characterised in that the annular body (12) is susceptible of taking up a variable diameter on the basis of the final size of the divertor.

12. METHOD FOR IMPLEMENTING THE MAGNETIC FLUX DIVERTOR, according to claim 10, characterised in that the annular body (12) is totally immersed in a die-casting die with non-magnetic material, for example an aluminium alloy, forming block 13.

13. METHOD FOR IMPLEMENTING THE MAGNETIC FLUX DIVERTOR, according to claim 12, characterised in that the die-cast block (13) is subjected to machining at machine tools, specifically to the roll flattening operations of the heads (14) and to the turning operations on the outer and inner diameter, respectively according to the lines (15, 16) with which, besides defining the outer profile and the inner profile of two divertors, the cusps (10) are eliminated so as to obtain the plurality of radially arranged magnetic foils (4) reciprocally spaced from the layer of non-magnetic material (8).
